# EUROPEAN PATENT APPLICATION

(11) **EP 2 363 966 A1**
(43) Date of publication of application: **07.09.2011**
(21) Application number: 09812624.6
(22) Date of filing: 22.07.2009
(51) Int. Cl.: H04B 10/158

(54) **METHOD FOR OPTIMALLY ADJUSTING A DECISION LEVEL OF A RECEIVER AND DEVICE THEREOF**

(30) Priority: 11.09.2008 CN 200810222207
(71) Applicant: ZTE Corporation, Shenzhen, Guangdong 518057 (CN)
(72) Inventor: ZHANG, Qi, Guangdong 518057 (CN)
(74) Representative: Kuhnen & Wacker
(86) International application number: PCT/CN2009/072878
(87) International publication number: WO 2010/028558

(57) **Abstract**

The present invention discloses a method and a device for optimally adjusting the decision level of a receiver, wherein the method includes: monitoring optical power received by an optical receiver; determining whether the variation amplitude of the optical power is greater than a predefined value; if yes, then updating a current initial value of the decision level according to the optical power; obtaining an error signal of a transmitted signal from the output end of the optical receiver; determining whether the decision level needs adjusting according to the error signal; if yes, then further analyzing the error signal according to the current initial value to obtain the result of the analysis; otherwise, exiting the execution program directly; and adjusting the decision level from the current initial value according to the result of the analysis. By monitoring the received optical power and setting the initial value of the decision level according to the received optical power, the method and the device avoid the interruption in the system service caused by a long search for the initial value of the decision level due to the variation of the optical power and thus greatly improve the stability of the system.

## Description

### TECHNICAL FIELD

The present invention relates to the field of digital communication systems, and in particular to a method for optimally adjusting the decision level of a receiver in a digital communication system and a device for adjusting the decision level using the method.

### BACKGROUND

An optimal adjustment on the decision level of a receiver is an important technology for improving system performance in a digital communication system. By optimally adjusting the decision level, the bit error rate of the system can be effectively reduced, while the noise margin of the system is improved. In a conventional telecommunication system or back-to-back (Bk-Bk) optical communication system, the noise in signal 1 is substantially as much as that in signal 0, so the decision level can be located at the position of an average value, i.e. the position of 50%; but as to the optical communication system after transmission, due to the influence of the noise and optical fiber dispersion generated by an optical amplifier, nonlinear effects on fiber and other factors, the noise in signal 1 is more than that in signal 0, so the optimal decision level is not located at the position of 50% any more but much closer to signal 0, then an automatic optimal adjustment is required for the decision level.

A limiting amplifier in a receiver is provided with or not provided with an automatic gain control function. For a receiver with automatic gain control function, a received optical signal is converted to an electric signal to be performed the automatic gain control, which means that the signal amplitude is performed normalization processing, so the value of a decision level is independent from received optical power. Whereas, for a receiver without automatic gain control function, the amplitude of the electric signal converted from a received optical signal is related to received optical power, so the value of a decision level is related to the received optical power. Various existing methods for performing an automatic optimal adjustment on a decision level are all required to optimize a decision level from an initial value. For a receiver with automatic gain control function, the value of a decision level is independent from received optical power, and the positions of decision levels are adjacent to each other, so a fine adjustment is only needed in small range and the existing methods for performing an automatic optimal adjustment on a decision level work steadily. However, for a receiver without automatic gain control function, the value of a decision level is closely related to received optical power, so the decision level may be significantly deviated if the received optical power is changed greatly, and the loss of frame (LOF) may occur in the system; once LOF occurs, various existing methods for performing an automatic optimal adjustment on a decision level cannot perform an optimal adjustment on the decision level before it finds a decision level capable of eliminating the LOF state as the initial value by a global search method, which is definitely time-consuming and will cause long-time system interruption.

### SUMMARY

An object of the present invention is to provide a method for optimally adjusting a decision level of a receiver and a device for adjusting a decision level using the method; the method and the device monitor received optical power and set an initial value of the decision level according to the received optical power so as to avoid the interruption in a system service caused by a long search for the initial value of the decision level due to the variation of the optical power and greatly improve the stability of the system.

In order to realize the above-mentioned object, a method for optimally adjusting the decision level of a receiver is provided according to one aspect of the present invention.

A method for optimally adjusting a decision level of a receiver provided according to the present invention comprises the following steps: monitoring optical power received by an optical receiver; determining whether the variation amplitude of the optical power is greater than a predefined value; if yes, then updating a current initial value of the decision level according to the optical power; obtaining an error signal of a transmitted signal from the output end of the optical receiver; determining whether the decision level needs adjusting according to the error signal; if yes, then further analyzing the error signal according to the current initial value to obtain the result of the analysis; otherwise, exiting the execution program directly; and adjusting the decision level from the current initial value according to the result of the analysis.

Preferably, before monitoring optical power received by an optical receiver, the method may further comprise the following steps: monitoring the states of loss of signal (LOS) and loss of frame (LOF); and determining whether the LOS or LOF occurs; if yes, then exiting the execution program.

Preferably, after adjusting the decision level from the current initial value, the method may further comprise the following step: re-obtaining an error signal of a transmitted signal from the output end of the optical receiver.

Preferably, in the method, the step of obtaining the result of the analysis may comprise the following steps: determining an adjustment direction of the decision level; and determining an adjustment step size of the decision level.

Preferably, in the method, the step of determining an adjustment step size of the decision level may comprise the following step: calculating the adjustment step size of the decision level according to the error signal, obtaining a large adjustment step size when the error signal is strong, and obtaining a small adjustment step size when the error signal is weak.

Preferably, in this method, the step of determining an adjustment step size of the decision level may comprise the following step: reading the value of the adjustment step size of the decision level from pre-stored adjustment step size data.

A device for optimally adjusting a decision level of a receiver is provided according to another aspect of the present invention.

A device for optimally adjusting the decision level of a receiver provided according to the present invention comprises: a received power monitoring module, an initial value setting module, an error signal obtaining module, an error signal analyzing module and a decision level adjusting module; wherein the received power monitoring module is used for monitoring optical power received by an optical receiver; the initial value setting module is connected with the received power monitoring module to compare the optical power with a predefined value and re-adjust and re-set a current initial value of the decision level according to the result of the comparison; the error signal obtaining module is connected with the output end of the optical receiver to obtain an error signal of a transmitted signal from the optical receiver; the error signal analyzing module is connected with the error signal obtaining module to determine whether the decision level needs adjusting according to the error signal and analyze the error signal to obtain a result of the analysis; and the decision level adjusting module is connected with the error signal analyzing module to adjust the decision level of the optical receiver from the current initial value according to the result of the analysis.

Preferably, in the device, the initial value setting module may set the current initial value through a coefficient modification or read the current initial value from a pre-stored data table; wherein the data of the pre-stored data table are obtained from experiments and are the optimal initial values of the decision level at different optical power.

Preferably, in the device, the analysis result obtained by the error signal analyzing module may comprise: determining an adjustment direction and adjustment step size of the decision level.

Preferably, in the device, the adjustment step size of the decision level may be obtained from a calculation according to the error signal or from pre-stored adjustment step size data.

Preferably, in the device, the error signal may include the times of forward error correction, a bit error rate and Q value.

Compared with the prior art, at least one of the above-mentioned technical schemes adopting the method and the device in the present invention has the following advantages: the initial value of a decision level is set by monitoring the received optical power, and the decision level is optimally adjusted according to the received optical power, especially for a receiver without automatic gain control function, units for monitoring the received optical power and setting the initial value of a decision level are configured (equal to adding automatic gain control function for such receiver), so as to avoid the interruption in a system service caused by the variation of the power and greatly improve the stability of the system.

The other characteristics and advantages of the present invention will be illustrated in the following specification, part of which become apparent from the specification or can be understood by implementing the present invention. The purpose and other advantages of the present invention can be realized and obtained from the specification, claims and the structures especially specified in the accompanying drawings.

### BRIEF DESCRIPTION OF THE DRAWINGS

As one part of the Specification, the drawings are provided to make the present invention understood better and to explain the present invention in combination with embodiments of the present invention but not to limit the present invention. In the accompanying drawings:
Fig. 1 is a flow chart illustrating a method for optically adjusting the decision level of a receiver according to a specific embodiment of the present invention;
Fig. 2 is a schematic diagram illustrating the structure of a device for optically adjusting the decision level of a receiver according to a specific embodiment of the present invention; and
Fig. 3 is a schematic diagram illustrating the structure of a first embodiment of the device for optically adjusting the decision level of a receiver according to a specific embodiment of the present invention.

### DETAILED DESCRIPTION

### Function overview

In a specific embodiment of the present invention, optical power received by an optical receiver is monitored, and a determination is made on whether the variation amplitude of the optical power is greater than a predefined value; if yes, then it is considered that LOF may occur in a system as the value of current decision level is significantly deviated, then a current initial value of the decision level is updated based on the currently received optical power. Besides, a determination is made on whether the decision level needs adjusting according to an error signal of a transmitted signal obtained from the optical receiver; if yes, then a further analysis is carried out for the error signal according to the current initial value to obtain the result of the analysis, and an optimal adjustment on the decision level is carried out from the current initial value according to the result of the analysis.

In order to make the purpose, technical schemes and advantages of the present invention more explicit, the present invention will be described below in detail with reference to the drawings and specific embodiments. It should be understood that the preferred embodiments described here are provided only for illustrating and explaining the present invention but not limiting the present invention. The embodiments and characteristics thereof can be mutually combined if no conflict is caused.

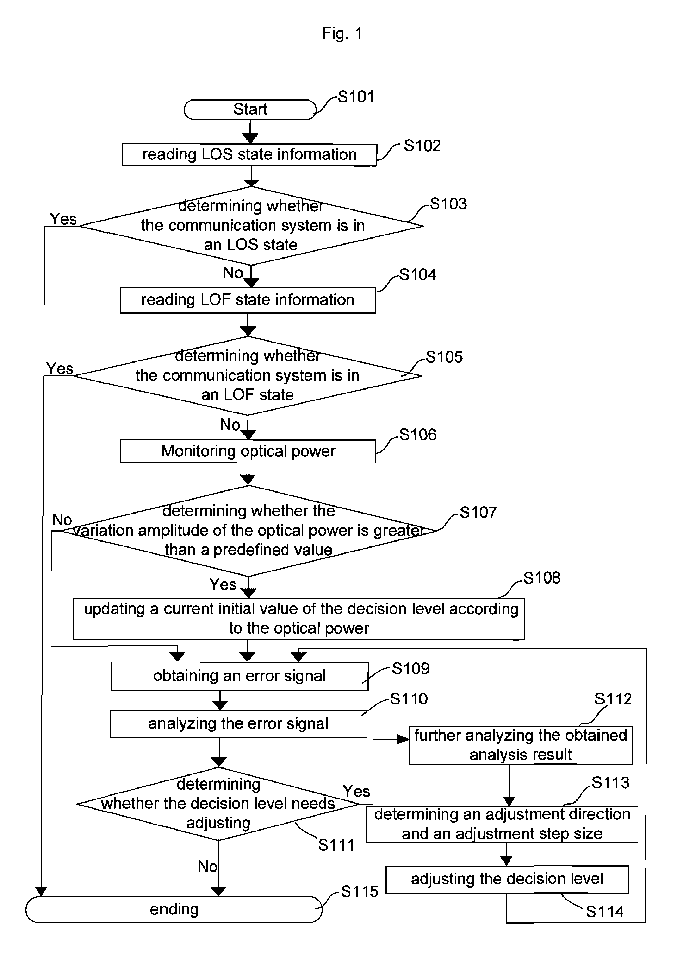

Fig. 1 is a flow chart illustrating a method for optically adjusting the decision level of a receiver according to a specific embodiment of the present invention. Referring to Fig. 1, the method is started with step S101, and then a determination is made on whether a receiver is in an loss of signal (LOS) or loss of frame (LOF) state; if it is in either LOS or LOF state, then a communication system is considered abnormal, and the flow is ended. Thus, in step S102, LOS state information of the communication system is read first.

In step S103, a determination is made on whether the communication system is in an LOS state according to the read LOS state information; if yes, then the flow is ended and step S115 is executed; otherwise, the flow is continued to execute step S104.

In step S104, LOF state information of the communication system is read.

In step S105, a determination is made on whether the communication system is in an LOF state according to the read LOF state information; if yes, then the flow is over, and step S115 is executed; otherwise, the flow is continued to execute step S106.

In step S106, optical power received by a receiver is monitored.

In step S107, a determination is made on whether the variation amplitude of the received optical power is greater than predefined value a; if yes, then it is considered that the value of current decision level is significantly deviated so that LOF may thus occur easily in the system, and the flow gets to step S108; otherwise, it is considered that the variation amplitude of the current optical power is too small to cause LOF, current initial value of the decision level needs no resetting, and the flow gets to step S109.

In step S108, the current initial value of the decision level is reset according to the variation amplitude of the currently received optical power, wherein the current initial value may be reset through a coefficient modification of multiplying the intermediate value of an adjustable decision level range with a different coefficient at different optical power, or the current initial value of the decision level is read from a pre-stored data table, wherein the data in the pre-stored data table are obtained from experiments and are the optimal initial values of the decision level at different optical power.

In step S109, an error signal of the signal resulted from an optical-electric conversion is obtained from the output end of the receiver, wherein the error signal is capable of representing system transmission performance information, such as bit error rate, the times of forward error correction, Q value and the like, and the flow gets to step S110.

In step S110, the error signal obtained in step S109 is analyzed.

In step S111, a determination is made on whether the decision level needs adjusting according to the result of the analysis carried out in step S110; if yes, then the flow gets to step S112; otherwise, there is no need to adjust the decision level so the flow gets to step S115 for ending.

In step S112, the error signal is further analyzed according to the current initial value of the decision level obtained in step S108 and the error signal obtained in step S109 to determine an adjustment direction and an adjustment step size of the decision level which needs adjusting.

In step S113, the adjustment direction and the adjustment step size are determined, wherein the adjustment step size can be a dynamically varying value calculated according to the value of the error signal, for example, when the error signal is represented by a bit error rate, the bit error rate is high during the initial decision level adjustment stage, the adjustment is performed with a large adjustment step size, and with the adjustment on the decision level, the bit error rate is reduced and the adjustment is conducted with a small step size value; during this process, the dynamic variation of the adjustment step size is calculated according to the variation of the bit error rate or is read from the stored adjustment step size data which are pre-stored according to the error signal value via using the data obtained from experiments.

In step S114, the decision level is optimally adjusted from the current initial value of the decision level obtained from step S108 according to the adjustment direction and the adjustment step size determined in step S113; besides, after executing step S114, the flow is returned to step S109 to monitor an error signal generated at a next moment so as to adjust the decision level optimally and timely.

Finally, the flow gets to step S115 for ending.

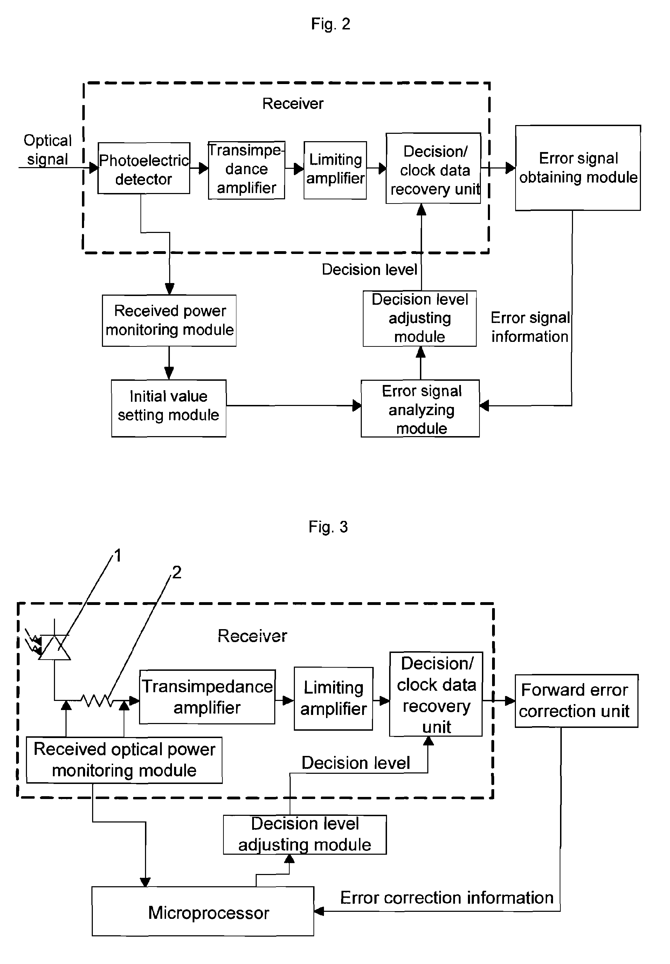

Further, it should be noted here that in the above-mentioned method for optimally adjusting the decision level of a receiver, the optical power received by the receiver is monitored in real time in step S106, once it is monitored that the variation amplitude of the optical power is greater than the predefined value a, the following flow shown in Fig. 2 is started to execute step S108: the current initial value of the decision level is reset according to the variation amplitude of the currently received optical power.

According to another aspect of a specific embodiment of the present invention, a device for optimally adjusting the decision level of a receiver is provided, the structural schematic diagram of which is shown in Fig. 2. A receiver commonly used in the field of an existing digital communication system comprises the following components:
a photoelectric detector, which is used for receiving an optical signal and performing a conversion from the optical signal to an electric signal, typically is a photodiode or an avalanche photodiode which outputs a photocurrent in proportion to average optical power;
a transimpedance amplifier, which is used for linearly amplifying the weak signal output from the photoelectric detector;
a limiting amplifier, which is used for conducting an amplitude amplification on the signal output from the transimpedance amplifier; and
a decision/clock data recovery unit, which comprises a fitter, a data/clock recovery module, a decision module, a de-multiplexer and other modules; the signal resulted from the optical-electric conversion conducted by the photoelectric detector and processed by the limiting amplifier and the decision/clock data recovery unit, are output via the decision/clock data recovery unit.

The device for optimally adjusting the decision level of a receiver according to a specific embodiment of the present invention comprises:
a received power monitoring module, an input end of which is connected with a photoelectric detector of a receiver to monitor the optical power received by the optical receiver and transmit an optical power monitoring signal capable of representing the optical power to an initial value setting module;
the initial value setting module, which is connected with the received power monitoring module to compare the optical power monitoring signal provided by the received power monitoring module with predefined value a, wherein if the variation amplitude of the received optical power monitoring signal is greater than predefined value a, then it is considered that the value of current decision level is significantly deviated and LOF may thus occur in the system easily, and the initial value setting module adjusts the setting of the current initial value of the decision level according to different received optical power via a table lookup or coefficient modification, and the standard and parameter selection for the adjustment may be obtained through a table making based on experimental data or a data fitting. Furthermore, the initial value setting module transmits the modified current initial value of the decision level that is reset according to the received optical power to a decision level adjusting module via an error signal analyzing module as the initial value used at the beginning of a decision level adjustment;
an error signal obtaining module which is connected with the decision/clock data recovery unit of the receiver to obtain the information capable of representing transmission performance of a communication system from the signal output from the receiver as an error signal and transmit the obtained error signal to the error signal analyzing module, wherein the error signal may be a bit error rate, the times of forward error correction, Q value and the like;
the error signal analyzing module, which is connected with the error signal obtaining module to analyze the error information obtained by the error signal obtaining module to determine whether the decision level needs adjusting, and further analyze the error signal to obtain a result of the analysis; if the decision level needs adjusting, then the error signal analyzing module further analyzes and determines an adjustment direction and an adjustment step size of the decision level according to the set current initial value of the decision level, and transmits information related to the analyzed adjustment direction and adjustment step size of the decision level to the decision level adjusting module, wherein the adjustment step of the decision level can be obtained via analyzing and calculating according to the error signal or reading from the pre-stored adjustment step size data; and
the decision level adjusting module, which is connected with the error signal analyzing module to optimally adjust the decision level of the receiver starting from the current initial value set by the initial value setting module according to the adjustment direction and the adjustment step size output from the error signal analyzing module.

An embodiment of the device for optimally adjusting the decision level of a receiver is described below; Fig. 3 is a schematic diagram illustrating the structure of the device for optically adjusting the decision level of a receiver according to this embodiment. As shown in Fig. 3, the photoelectric detector of the receiver is photodiode 1, sampling resistor 2 is connected between photodiode 1 and the transimpedance amplifier to convert the photocurrent output from photodiode 1 to a voltage, and a received optical power monitoring module is connected with the two ends of the sampling resistor 2 to monitor the variation of the received optical power according to the variation of the voltages at the two ends of the sampling resistor 2. The received optical power monitoring module is further connected with a microprocessor to amplify and filter the voltage output from the sampling resistor and output the processed information of the received optical power to the microprocessor; if it is detected by the microprocessor that the variation amplitude of the received optical power is greater than predefined value a, then the initial value of the current decision level needs updating.

In this specific embodiment of the present invention, the error signal obtaining module is a forward error correction unit which takes the error correction information provided by the forward error correction unit as error information for an optimal adjustment on the decision level. As a monotonic corresponding relationship exists between the difference of the numbers of 0 and 1 corrected by the forward error correction unit of the receiver and the decision level, the difference of the numbers of the corrected 0 and 1 is taken as a standard for an adjustment on decision level to minimize the difference, i.e., to minimize the bit error rate. As the probabilities of signals 1 and 0 in an optical communication system are the same, the decision level is optimal when the bit error rates of signals 1 and 0 are equal, then the minimum bit error rate of the system is achieved. In a forward error correction system, the number of the corrected 1 is greater than that of the corrected 0 when the decision level is higher than the optimal decision level, and the number of the corrected 0 is greater than that of the corrected 1 when the decision level is lower than the optimal decision level. Therefore, in this embodiment, the difference of the numbers of the corrected 1 and 0 can be taken as a standard for an adjustment on decision level.

As shown in Fig. 3, the signal resulted from an optical-electric signal conversion conducted by photodiode 1 is processed by the sampling resistor, the transimpedance amplifier and the limiting amplifier and then output to the forward error correction unit via the decision/clock data recovery unit; the output end of the forward error correction unit is connected with the microprocessor to input the difference of the numbers of the corrected 1 and 0 to the microprocessor, it is determined by the microprocessor that whether the decision level needs adjusting; moreover, an optimal decision level data table at different optical power is stored in the microprocessor, the data in the data table are optimal decision level values obtained based on experiments; according to the initial value of the current decision level and the obtained error signal, the microprocessor reads the optimal decision level at the current optimal power from the data table and determines the adjustment direction and adjustment step size of the decision level.

Further, the output end of the microprocessor is connected with the decision level adjustment unit which adjusts the decision level according to the adjustment direction and adjustment step size of the decision level output from the microprocessor and transmits the adjusted decision level value to the decision/clock data recovery unit.

According to the device for optimally adjusting the decision level of a receiver of specific embodiments of the present invention, for a receiver without automatic gain control function, the initial value of the decision level, which is obtained based on experiments and is a proper decision level value at a new power, can be obtained through a table lookup when the received optical power is greatly varied and it is detected by the optical power monitoring module that the variation value of the optical power is greater than a predefined value, so LOS or LOF is definitely eliminated in the system at this time. In this way, an optimal decision level value is obtained by optimizing the decision level based on the initial value and the error correction information provided by the forward error correction unit.

The mentioned above are only preferred embodiments of the present invention but not limitation for the present invention, and it should be understood by those skilled in this art that various modification and variations can be devised and all the modifications, equivalents and modifications devised without departing from the spirit and principle of the present invention belong to the protection scope of the present invention.

## Claims

1. A method for optimally adjusting a decision level of a receiver, including:
monitoring optical power received by an optical receiver;
determining whether the variation amplitude of the optical power is greater than a predefined value; if yes, then updating a current initial value of the decision level according to the optical power;
obtaining an error signal of a transmitted signal from the output end of the optical receiver;
determining whether the decision level needs adjusting according to the error signal; if yes, then further analyzing the error signal according to the current initial value to obtain the result of the analysis; otherwise, exiting the execution program directly; and
adjusting the decision level from the current initial value according to the result of the analysis.

2. The method according to claim 1, before the step of monitoring the optical power received by an optical receiver, further including:
monitoring states of loss of signal (LOS) and loss of frame (LOF); and
determining whether the LOS or LOF occurs; if yes, then exiting the execution program.

3. The method according to claim 1, after the step of adjusting the decision level from the current initial value, further including:
re-obtaining an error signal of a transmitted signal from the output end of the optical receiver.

4. The method according to claim 1, wherein the step of obtaining the result of the analysis includes:
determining an adjustment direction of the decision level; and
determining an adjustment step size of the decision level.

5. The method according to claim 4, wherein the step of determining the adjustment step size of the decision level includes: calculating the adjustment step size of the decision level according to the error signal, obtaining a large adjustment step size when the error signal is strong, and obtaining a small adjustment step size when the error signal is weak.

6. The method according to claim 4, wherein the step of determining the adjustment step size of the decision level includes: reading the value of the adjustment step size of the decision level from pre-stored adjustment step size data.

7. A device for optimally adjusting a decision level of a receiver, including:
a received power monitoring module for monitoring optical power received by an optical receiver;
an initial value setting module which is connected with the received power monitoring module to compare the optical power with a predefined value and re-adjust and re-set a current initial value of the decision level according to the result of the comparison;
an error signal obtaining module which is connected with the output end of the optical receiver to obtain an error signal of a transmitted signal from the optical receiver;
an error signal analyzing module which is connected with the error signal obtaining module to determine whether the decision level needs adjusting according to the error signal and analyze the error signal to obtain a result of the analysis; and
a decision level adjusting module which is connected with the error signal analyzing module to adjust the decision level of the optical receiver from the current initial value according to the result of the analysis.

8. The device according to claim 7, wherein the initial value setting module sets the current initial value through a coefficient modification or reads the current initial value from a pre-stored data table; wherein the data of the pre-stored data table are obtained from experiments and are the optimal initial values of the decision level at different optical power.

9. The device according to claim 7, wherein the analysis result obtained by the error signal analyzing module includes: determining an adjustment direction and an adjustment step size of the decision level.

10. The device according to claim 9, wherein the adjustment step size of the decision level is obtained from a calculation according to the error signal or from pre-stored adjustment step size data.
